# EUROPEAN PATENT APPLICATION

(11) **EP 3 832 772 A1**
(43) Date of publication of application: **09.06.2021**
(21) Application number: 19844834.2
(22) Date of filing: 30.07.2019
(51) Int. Cl.: H01M 10/0569, H01G 11/30, H01G 11/60, H01G 11/62, H01M 4/38, H01M 4/46, H01M 10/054, H01M 10/0568, H01M 12/08

(54) **ELECTROLYTIC SOLUTION AND ELECTROCHEMICAL DEVICE**

(30) Priority: 01.08.2018 JP 2018145252
(71) Applicant: Murata Manufacturing Co., Ltd., Nagaokakyo-shi, Kyoto 617-8555 (JP)
(72) Inventor: MATSUMOTO, Ryuhei, Nagaokakyo-shi, Kyoto 617-8555 (JP); NAKAYAMA, Yuri, Nagaokakyo-shi, Kyoto 617-8555 (JP)
(74) Representative: Witte, Weller & Partner Patentanwälte mbB
(86) International application number: PCT/JP2019/029764
(87) International publication number: WO 2020/027099

(57) **Abstract**

Provided is an electrolytic solution for an electrochemical device including a magnesium electrode as a negative electrode, the electrolytic solution containing: a solvent containing a linear ether; and a magnesium salt contained in the solvent. In the electrolytic solution, the linear ether has two or more ethyleneoxy structural units represented by a following general formula. 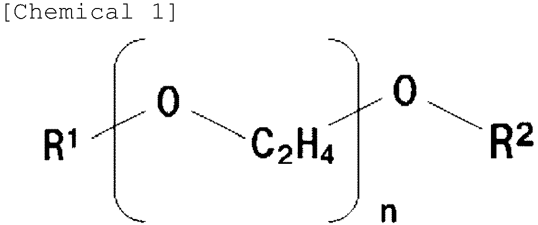 wherein, R¹ and R² are each independently a hydrocarbon group having 1 to 10 inclusive carbon atoms, and n is an integer of 2 to 10 inclusive.

## Description

### TECHNICAL FIELD

The present invention relates to an electrolytic solution and an electrochemical device.

### BACKGROUND ART

Electrochemical devices such as a capacitor, an air battery, a fuel battery, and a secondary battery are used for various application uses. An electrochemical device includes a positive electrode, a negative electrode and has an electrolytic solution that transfers ions between the positive electrode and the negative electrode.

For example, an electrochemical device represented by a magnesium battery includes, as an electrode, an electrode made from magnesium or an electrode containing at least magnesium (hereinafter, such an electrode is also simply referred to as a "magnesium electrode", and the electrochemical device including the magnesium electrode is also referred to as a "magnesium electrode-type electrochemical device"). Magnesium is a more abundant resource and cheaper than lithium. In addition, magnesium generally has a larger quantity of electricity per unit volume that can be obtained by an oxidation-reduction reaction, and is highly safe when used in the electrochemical device. Therefore, the magnesium battery draws attention as a next-generation secondary battery replacing lithium-ion batteries.

### PRIOR ART DOCUMENT

### PATENT DOCUMENT

Patent Document 1: US Patent Application Laid-Open No. US 2013/252112 A1

### SUMMARY OF THE INVENTION

### Problem to be solved by the invention

As an electrolytic solution of the magnesium secondary battery, use of a magnesium salt and an ether-based organic solvent for dissolving the magnesium salt is proposed. For example, in US Patent Application Laid-Open No. US 2013/252112 A1, dimethoxyethane (DME), that is, ethylene glycol dimethyl ether is used as the solvent for dissolving the magnesium salt.

The magnesium electrode-type electrochemical device that includes such an electrolytic solution containing an ether-based organic solvent is required to have a higher discharge potential. This is because a higher discharge potential can lead to realization of an electrochemical device exhibiting a higher energy density.

The present invention has been made in view of the problem. That is, a main object of the present invention is to provide an electrolytic solution that contributes to realization of an electrochemical device having a higher discharge potential.

### Means for solving the problem

The inventor of the present application has attempted to solve the above problem not by taking a measure derived from a conventional technique but by a new way. This attempt has resulted in attaining an invention of an electrolytic solution achieving the main object.

The present invention provides an electrolytic solution for an electrochemical device including a magnesium electrode as a negative electrode, the electrolytic solution containing: a solvent containing a linear ether; and a magnesium salt contained in the solvent, the linear ether having two or more ethyleneoxy structural units represented by a following general formula.

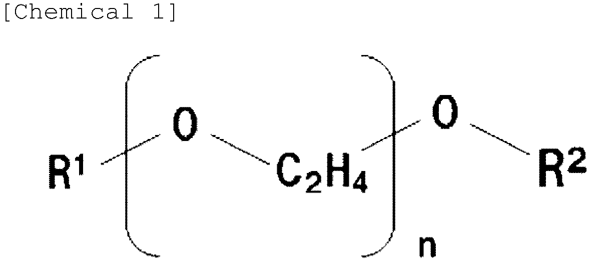

In the formula, R¹ and R² are each independently a hydrocarbon group having 1 to 10 inclusive carbon atoms, and n is an integer of 2 to 10 inclusive.

### Advantageous effect of the invention

The electrolytic solution according to the present invention can give an electrochemical device exhibiting a higher discharge potential. More specifically, the magnesium electrode-type electrochemical device including the electrolytic solution according to the present invention can exhibit a higher discharge potential than when particularly dimethoxyethane (DME) is used as the solvent of an electrolytic solution.

Because of this viewpoint, the magnesium electrode-type electrochemical device including the electrolytic solution according to the present invention can have a higher energy density. The effect described in the present specification is just an example and is not limited, and an additional effect may be exerted.

### BRIEF EXPLANATION OF DRAWINGS

FIG. 1 is a conceptual diagram of a magnesium electrode-type electrochemical device (particularly a battery) according to one embodiment of the present invention.
FIG. 2 is a schematic sectional view of a magnesium secondary battery (cylindrical magnesium secondary battery) provided as one embodiment of the present invention.
FIG. 3 is a schematic perspective view of a magnesium secondary battery (planar laminate-film magnesium secondary battery) provided as one embodiment of the present invention.
FIG. 4 is a schematic sectional view of an electrochemical device provided as a capacitor in one embodiment of the present invention.
FIG. 5 is a schematic sectional view of an electrochemical device provided as an air battery in one embodiment of the present invention.
FIG. 6 is a schematic sectional view of an electrochemical device provided as a fuel battery in one embodiment of the present invention.
FIG. 7 is a block diagram illustrating an example of a circuit configuration when a magnesium secondary battery provided as one embodiment of the present invention is applied to a battery pack.
FIG. 8 is block diagrams (FIGS. 8A, 8B, and 8C) respectively showing configurations of an electric vehicle, a power storage system, and an electric tool to which a magnesium secondary battery is applied as one embodiment of the present invention.
FIG. 9 is a developed view schematically showing a battery produced in EXAMPLES of the present specification.
FIG. 10 is charge and discharge curves showing results obtained in EXAMPLES of the present specification.

### MODE FOR CARRYING OUT THE INVENTION

Hereinafter, "an electrolytic solution for an electrochemical device and "an electrochemical device" according to the present invention are described in detail. While the description is made with reference to the drawings as necessary, the contents shown in the drawings are only schematically and illustratively shown for understanding the present invention, and the appearance, the dimensional ratio, and the like can be different from the actual ones. Various numerical ranges referred to in the present specification are intended to include the values of the upper limit and the lower limit. That is, when there is, for example, a numerical range of 1 to 10, the lower limit value "1" and the upper limit value "10" are interpreted to be included unless otherwise specified.

The "electrochemical device" in the present invention broadly means a device capable of obtaining energy using an electrochemical reaction. The "electrochemical device" narrowly means a device including a pair of electrodes and an electrolyte, particularly a device that charges and discharges along with movement of ions.

The electrochemical device is, as just an example, a capacitor, an air battery, a fuel battery, or the like, in addition to the secondary battery.

### [Electrolytic solution according to the present invention for electrochemical device]

The electrolytic solution according to the present invention is used in an electrochemical device. That is, the electrolytic solution described in the present specification corresponds to an electrolyte for a device capable of obtaining energy using an electrochemical reaction.

The electrolytic solution according to the present invention is an electrolytic solution presupposed to be used in an electrochemical device including a magnesium electrode. Particularly, the electrolytic solution according to the present invention is an electrolytic solution for an electrochemical device including the magnesium electrode as a negative electrode. Accordingly, the electrolytic solution according to the present invention can also be said to be an electrolytic solution for a magnesium electrode-type electrochemical device (hereinafter, also simply referred to as a "magnesium electrode-type electrolytic solution").

As described later, this electrochemical device including the magnesium electrode as the negative electrode preferably includes a sulfur electrode as a positive electrode. That is, in one preferred aspect, the electrolytic solution according to the present invention is an electrolytic solution for magnesium (Mg)-sulfur (S) electrodes.

Here, the "magnesium electrode" used in the present specification broadly indicates an electrode containing magnesium (Mg) as an active component (that is, an active material). The "magnesium electrode" narrowly indicates an electrode made from magnesium, for example, an electrode containing metal magnesium or a magnesium alloy, and particularly indicates a negative electrode of such magnesium. The magnesium electrode may contain a component other than the metal magnesium or the magnesium alloy, but is an electrode formed of a magnesium metal object (for example, an electrode formed of a solid object of metal magnesium having a purity of 90% or more, preferably a purity of 95% or more, further preferably a purity of 98% or more) in one preferred aspect.

The "sulfur electrode" used in the present specification broadly indicates an electrode containing sulfur (S) as an active component (that is, an active material). The "sulfur electrode" narrowly indicates an electrode containing at least sulfur, for example, an electrode containing sulfur (S) such as S₈ and/or polymer sulfur, particularly a positive electrode of such sulfur. The sulfur electrode may contain a component other than sulfur and may contain, for example, a conductive assistant or a binder. The content of sulfur in the sulfur electrode may be, as just an example, 5 mass% to 95 mass% inclusive, preferably 70 mass% to 90 mass% inclusive, relative to the whole electrode (in another exemplary aspect, the content of sulfur in the sulfur electrode may be 5 mass% to 20 mass% or 5 mass% to 15 mass%).

The magnesium electrode-type electrolytic solution according to the present invention contains at least a solvent and a magnesium salt. More specifically, the electrolytic solution contains a magnesium salt and an ether-based solvent for dissolving the salt.

The solvent is an ether-based solvent, particularly a linear ether. That is, not a cyclic ether such as tetrahydrofuran, but an ether that contains molecules having a linear structure constitutes the solvent of the magnesium electrode-type electrolytic solution. Simply speaking, the solvent in the magnesium electrode-type electrolytic solution according to the present invention is preferably a linear ether solvent.

In the magnesium electrode-type electrolytic solution according to the present invention, the linear ether as the solvent is a linear ether having two or more ethyleneoxy structural units represented by a following general formula.

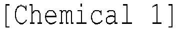

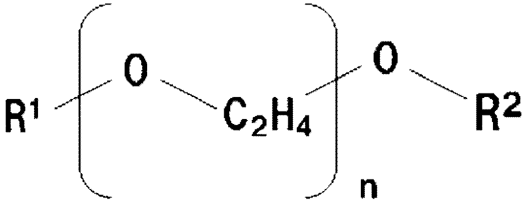

In the formula, R¹ and R² are each independently a hydrocarbon group having 1 to 10 inclusive carbon atoms, and n is an integer of 2 to 10 inclusive.

The solvent used in the magnesium electrode-type electrolytic solution according to the present invention has a feature of having two or more ethyleneoxy structural units. The "ethyleneoxy structural unit" referred to herein indicates a molecular structural unit (-O-C₂H₄-) in which an ethylene group is bonded with an oxygen atom, and two or more such molecular structural units are contained in the linear ether. From another perspective viewpoint, the linear ether in the magnesium electrode-type electrolytic solution can be said to have a structure obtained by dehydrating and condensing two or more glycol molecules.

The R¹ and the R² in the general formula of the linear ether each independently represent a hydrocarbon group. Therefore, the R¹ and the R² may be each independently an aliphatic hydrocarbon group, an aromatic hydrocarbon group, and/or an aromatic aliphatic hydrocarbon group. The "linear ether" referred to in the present invention means that at least a site of the ethyleneoxy structural unit is not branched (that is, having no branched structure). Therefore, the R¹ and the R² in the general formula do not necessarily have a linear structure, but may have a branched structure. In one preferred aspect, the linear ether used in the magnesium electrode-type electrolytic solution according to the present invention is a glycol ether having no branched structure not only at the site of the ethyleneoxy structural unit but also at the R¹ or the R².

Since the linear ether has "two or more ethyleneoxy structural units" in the magnesium electrode-type electrolytic solution according to the present invention, the magnesium electrode-type electrochemical device exhibits a higher discharge potential.

That is, not a single ethyleneoxy structural unit, but the "two or more ethyleneoxy structural units" directly or indirectly contributes to improvement in characteristics of the magnesium electrode-type electrolytic solution. Without restriction by a specific theory, this is considered to be because the "two or more ethyleneoxy structural units" more effectively draw the characteristics of the magnesium electrode together with the presence of the magnesium salt dissolved in the solvent having the structural units.

Examples of the linear ether having such two or more ethyleneoxy structural units include, but are not limited to, a diethylene glycol ether, a triethylene glycol ether, a tetraethylene glycol ether, a pentaethylene glycol ether, and a hexaethylene glycol ether. Similarly, the linear ether may also be a heptaethylene glycol ether, an octaethylene glycol ether, a nonaethylene glycol ether, a decaethylene glycol ether, or the like, and may further be a polyethylene glycol ether having further more ethyleneoxy structural units.

As one preferred aspect of the linear ether in the present invention, the hydrocarbon group having 1 to 10 inclusive carbon atoms is an aliphatic hydrocarbon group. That is, as regards the linear ether contained in the magnesium electrode-type electrolytic solution according to the present invention, the R¹ and the R² in the general formula may be each independently an aliphatic hydrocarbon group having 1 to 10 inclusive carbon atoms. Examples include, but are not limited to, the following a diethylene glycol ether, a triethylene glycol ether, a tetraethylene glycol ether, a pentaethylene glycol ether, and a hexaethylene glycol ether. Similarly, the linear ether may also be a heptaethylene glycol ether, an octaethylene glycol ether, a nonaethylene glycol ether, or a decaethylene glycol ether.

### (Diethylene glycol ether)

Diethylene glycol dimethyl ether, diethylene glycol ethyl methyl ether, diethylene glycol methyl propyl ether, diethylene glycol butyl methyl ether, diethylene glycol methyl pentyl ether, diethylene glycol methyl hexyl ether, diethylene glycol methyl heptyl ether, and diethylene glycol methyl octyl ether;
diethylene glycol diethyl ether, diethylene glycol ethyl propyl ether, diethylene glycol butyl ethyl ether, diethylene glycol ethyl pentyl ether, diethylene glycol ethyl hexyl ether, diethylene glycol ethyl heptyl ether, and diethylene glycol ethyl octyl ether;
diethylene glycol dipropyl ether, diethylene glycol butyl propyl ether, diethylene glycol propyl pentyl ether, diethylene glycol propyl hexyl ether, diethylene glycol propyl heptyl ether, and diethylene glycol propyl octyl ether;
diethylene glycol dibutyl ether, diethylene glycol butyl pentyl ether, diethylene glycol butyl hexyl ether, diethylene glycol butyl heptyl ether, and diethylene glycol butyl octyl ether;
diethylene glycol dipentyl ether, diethylene glycol hexyl pentyl ether, diethylene glycol heptyl pentyl ether, and diethylene glycol octyl pentyl ether;
diethylene glycol dihexyl ether, diethylene glycol heptyl hexyl ether, and diethylene glycol hexyl octyl ether;
diethylene glycol diheptyl ether and diethylene glycol heptyl octyl ether; and
diethylene glycol dioctyl ether.

### (Triethylene glycol ether)

Triethylene glycol dimethyl ether, triethylene glycol ethyl methyl ether, triethylene glycol methyl propyl ether, triethylene glycol butyl methyl ether, triethylene glycol methyl pentyl ether, triethylene glycol methyl hexyl ether, triethylene glycol methyl heptyl ether, and triethylene glycol methyl octyl ether;
triethylene glycol diethyl ether, triethylene glycol ethyl propyl ether, triethylene glycol butyl ethyl ether, triethylene glycol ethyl pentyl ether, triethylene glycol ethyl hexyl ether, triethylene glycol ethyl heptyl ether, and triethylene glycol ethyl octyl ether;
triethylene glycol dipropyl ether, triethylene glycol butyl propyl ether, triethylene glycol propyl pentyl ether, triethylene glycol propyl hexyl ether, triethylene glycol propyl heptyl ether, and triethylene glycol propyl octyl ether;
triethylene glycol dibutyl ether, triethylene glycol butyl pentyl ether, triethylene glycol butyl hexyl ether, triethylene glycol butyl heptyl ether, and triethylene glycol butyl octyl ether;
triethylene glycol dipentyl ether, triethylene glycol hexyl pentyl ether, triethylene glycol heptyl pentyl ether, and triethylene glycol octyl pentyl ether;
triethylene glycol dihexyl ether, triethylene glycol heptyl hexyl ether, and triethylene glycol hexyl octyl ether;
triethylene glycol diheptyl ether and triethylene glycol heptyl octyl ether; and
triethylene glycol dioctyl ether.

### (Tetraethylene glycol ether)

Tetraethylene glycol dimethyl ether, tetraethylene glycol ethyl methyl ether, tetraethylene glycol methyl propyl ether, tetraethylene glycol butyl methyl ether, tetraethylene glycol methyl pentyl ether, tetraethylene glycol methyl hexyl ether, tetraethylene glycol methyl heptyl ether, and tetraethylene glycol methyl octyl ether;
tetraethylene glycol diethyl ether, tetraethylene glycol ethyl propyl ether, tetraethylene glycol butyl ethyl ether, tetraethylene glycol ethyl pentyl ether, tetraethylene glycol ethyl hexyl ether, tetraethylene glycol ethyl heptyl ether, and tetraethylene glycol ethyl octyl ether;
tetraethylene glycol dipropyl ether, tetraethylene glycol butyl propyl ether, tetraethylene glycol propyl pentyl ether, tetraethylene glycol propyl hexyl ether, tetraethylene glycol propyl heptyl ether, and tetraethylene glycol propyl octyl ether;
tetraethylene glycol dibutyl ether, tetraethylene glycol butyl pentyl ether, tetraethylene glycol butyl hexyl ether, tetraethylene glycol butyl heptyl ether, and tetraethylene glycol butyl octyl ether;
tetraethylene glycol dipentyl ether, tetraethylene glycol hexyl pentyl ether, tetraethylene glycol heptyl pentyl ether, and tetraethylene glycol octyl pentyl ether;
tetraethylene glycol dihexyl ether, tetraethylene glycol heptyl hexyl ether, and tetraethylene glycol hexyl octyl ether;
tetraethylene glycol diheptyl ether and tetraethylene glycol heptyl octyl ether; and
tetraethylene glycol dioctyl ether.

### (Pentaethylene glycol ether)

Pentaethylene glycol dimethyl ether, pentaethylene glycol ethyl methyl ether, pentaethylene glycol methyl propyl ether, pentaethylene glycol butyl methyl ether, pentaethylene glycol methyl pentyl ether, pentaethylene glycol methyl hexyl ether, pentaethylene glycol methyl heptyl ether, and pentaethylene glycol methyl octyl ether;
pentaethylene glycol diethyl ether, pentaethylene glycol ethyl propyl ether, pentaethylene glycol butyl ethyl ether, pentaethylene glycol ethyl pentyl ether, pentaethylene glycol ethyl hexyl ether, pentaethylene glycol ethyl heptyl ether, and pentaethylene glycol ethyl octyl ether;
pentaethylene glycol dipropyl ether, pentaethylene glycol butyl propyl ether, pentaethylene glycol propyl pentyl ether, pentaethylene glycol propyl hexyl ether, pentaethylene glycol propyl heptyl ether, and pentaethylene glycol propyl octyl ether;
pentaethylene glycol dibutyl ether, pentaethylene glycol butyl pentyl ether, pentaethylene glycol butyl hexyl ether, pentaethylene glycol butyl heptyl ether, and pentaethylene glycol butyl octyl ether;
pentaethylene glycol dipentyl ether, pentaethylene glycol hexyl pentyl ether, pentaethylene glycol heptyl pentyl ether, and pentaethylene glycol octyl pentyl ether;
pentaethylene glycol dihexyl ether, pentaethylene glycol heptyl hexyl ether, and pentaethylene glycol hexyl octyl ether;
pentaethylene glycol diheptyl ether and pentaethylene glycol heptyl octyl ether; and
pentaethylene glycol dioctyl ether.

### (Hexaethylene glycol ether)

Hexaethylene glycol dimethyl ether, hexaethylene glycol ethyl methyl ether, hexaethylene glycol methyl propyl ether, hexaethylene glycol butyl methyl ether, hexaethylene glycol methyl pentyl ether, hexaethylene glycol methyl hexyl ether, hexaethylene glycol methyl heptyl ether, and hexaethylene glycol methyl octyl ether;
hexaethylene glycol diethyl ether, hexaethylene glycol ethyl propyl ether, hexaethylene glycol butyl ethyl ether, hexaethylene glycol ethyl pentyl ether, hexaethylene glycol ethyl hexyl ether, hexaethylene glycol ethyl heptyl ether, and hexaethylene glycol ethyl octyl ether;
hexaethylene glycol dipropyl ether, hexaethylene glycol butyl propyl ether, hexaethylene glycol propyl pentyl ether, hexaethylene glycol propyl hexyl ether, hexaethylene glycol propyl heptyl ether, and hexaethylene glycol propyl octyl ether;
hexaethylene glycol dibutyl ether, hexaethylene glycol butyl pentyl ether, hexaethylene glycol butyl hexyl ether, hexaethylene glycol butyl heptyl ether, and hexaethylene glycol butyl octyl ether;
hexaethylene glycol dipentyl ether, hexaethylene glycol hexyl pentyl ether, hexaethylene glycol heptyl pentyl ether, and hexaethylene glycol octyl pentyl ether;
hexaethylene glycol dihexyl ether, hexaethylene glycol heptyl hexyl ether, and hexaethylene glycol hexyl octyl ether;
hexaethylene glycol diheptyl ether and hexaethylene glycol heptyl octyl ether; and
hexaethylene glycol dioctyl ether.

Similarly, the linear ether may also be a heptaethylene glycol ether, an octaethylene glycol ether, a nonaethylene glycol ether, a decaethylene glycol ether, or the like, and may further be a polyethylene glycol ether.

In the magnesium electrode-type electrolytic solution according to the present invention, the linear ether described above and a magnesium salt coexist. Preferably, the magnesium salt is in a state of being dissolved in the linear ether. The magnesium salt combined with the linear ether may be one type of magnesium salt or may be a magnesium salt formed of more types of magnesium salts (for examples, two types of magnesium salts).

As one preferred aspect, in the magnesium electrode-type electrolytic solution according to the present invention, the linear ether as a solvent has two or more ethyleneoxy structural units and one or more types of magnesium salts are dissolved in the solvent having the structural units, and therefore, the magnesium electrode-type electrochemical device easily exhibits a higher discharge potential.

Examples of such a magnesium salt include a salt represented by a general formula MgXₙ (n is 1 or 2, X is a monovalent or divalent anion). When X is a halogen (F, Cl, Br, or I), such a magnesium salt constitutes a halogen metal salt. Alternatively, there may be a case in which X is another anion, and the magnesium salt may be, for example, at least one type of magnesium salt selected from the group consisting of magnesium perchlorate (Mg(ClO₄)₂), magnesium nitrate (Mg(NO₃)₂), magnesium sulfate (MgSO₄), magnesium acetate (Mg(CH₃COO)₂), magnesium trifluoroacetate (Mg(CF₃COO)₂), magnesium tetrafluoroborate (Mg(BF₄)₂), magnesium tetraphenylborate (Mg(B(C₆H₅)₄)₂), magnesium hexafluorophosphate (Mg(PF₆)₂), magnesium hexafluoroarsenate (Mg(AsF₆)₂), a magnesium salt of a perfluoroalkylsulfonic acid ((Mg(R_{f1}SO₃)₂) in which R_{f1} is a perfluoroalkyl group), a magnesium salt of a perfluoroalkylsulfonyl imide (Mg((R_{f2}SO₂)₂N)₂ in which R_{f2} is a perfluoroalkyl group), and a magnesium salt of a hexaalkyldisilazide ((Mg(HRDS)₂) in which R is an alkyl group).

Above all, particularly, at least one type of halogen or imide-based magnesium salt is preferable. That is, the magnesium salt combined with the linear ether may be either one of a halogen metal salt and an imide metal salt, or may be a combination of a halogen metal salt and an imide metal salt. This means that at least one type of halogen metal salt or imide metal salt is, as the magnesium salt, in a state of being dissolved in the linear ether. The use of such a magnesium salt allows the magnesium electrode-type electrochemical device to further easily exhibit a higher discharge potential.

The halogen metal salt is at least one selected from the group consisting of magnesium fluoride (MgF₂), magnesium chloride (MgCl₂), magnesium bromide (MgBr₂), and magnesium iodide (MgI₂). Above all, magnesium chloride is preferably used as the halogen metal salt. That is, magnesium chloride (MgCl₂) is preferable as the magnesium salt combined with the linear ether. This is because the magnesium chloride (MgCl₂) allows the electrochemical device to easily achieve a high discharge potential.

In a preferred aspect, the magnesium chloride (MgCl₂) is, together with an imide salt, capable of promoting the achievement of a high discharge potential by the magnesium electrode-type electrochemical device.

The imide metal salt is a magnesium salt containing an imide as a molecular structure.

Preferably, the imide metal salt is a magnesium salt containing a sulfonyl imide as a molecular structure. This is because the magnesium salt containing a sulfonyl imide as a molecular structure allows the electrochemical device to easily achieve a high discharge potential. In a preferred aspect, the magnesium salt containing a sulfonyl imide as a molecular structure is, together with the halogen metal salt (for example, magnesium chloride), capable of promoting the achievement of a high discharge potential by the magnesium electrode-type electrochemical device.

In one preferred aspect, the imide metal salt is a magnesium salt of a perfluoroalkylsulfonyl imide. That is, the imide metal salt is preferably Mg((R_{f}SO₂)₂N)₂ (in the formula, R_{f} is a perfluoroalkyl group). For example, the R_{f} may be a perfluoroalkyl group having 1 to 10 inclusive carbon atoms, a perfluoroalkyl group having 1 to 8 inclusive carbon atoms, a perfluoroalkyl group having 1 to 6 inclusive carbon atoms, a perfluoroalkyl having 1 to 4 inclusive carbon atoms, a perfluoroalkyl group having 1 to 3 inclusive carbon atoms, or a perfluoroalkyl group having 1 to 2 inclusive carbon atoms. As one example, the imide metal salt may be magnesium bis(trifluoromethanesulfonyl)imide. That is, the imide metal salt may be Mg(TFSI)₂. The Mg(TFSI)₂ allows the electrochemical device to easily achieve a high discharge potential. In a preferred aspect, Mg(TFSI)₂ is, together with the halogen metal salt (particularly, magnesium chloride (MgCl₂)), capable of particularly promoting the achievement of a high discharge potential by the magnesium electrode-type electrochemical device.

In the magnesium electrode-type electrolytic solution according to the present invention, the linear ether solvent combined with the magnesium salt may be particularly one having two to four ethyleneoxy structural units. That is, in the general formula representing the linear ether, the n may be an integer of 2 to 4 inclusive, and the linear ether may thus be an ether having 2 to 4 inclusive ethyleneoxy structural units.

In a preferred aspect, the linear ether solvent combined with the magnesium salt is at least one selected from the group consisting of a diethylene glycol ether, a triethylene glycol ether, and a tetraethylene glycol ether.

In the magnesium electrode-type electrolytic solution according to the present invention, the linear ether solvent combined with the magnesium salt may be particularly one having a lower alkyl group having 1 to 4 carbon atoms. In other words, the R¹ and the R² may be each independently an alkyl group having 1 to 4 inclusive carbon atoms in the general formula representing the linear ether.

As regards this feature, in a preferred aspect, the linear ether contained in the magnesium electrode-type electrolytic solution according to the present invention may be, with respect to the glycol ether such as a diethylene glycol ether, a triethylene glycol ether, a tetraethylene glycol ether, a pentaethylene glycol ether, a hexaethylene glycol ether, a heptaethylene glycol ether, an octaethylene glycol ether, a nonaethylene glycol ether, or a decaethylene glycol ether, dimethyl ether, ethyl methyl ether, methyl propyl ether, butyl methyl ether, diethyl ether, ethyl propyl ether, butyl ethyl ether, dipropyl ether, butyl propyl ether, or dibutyl ether. That is, the linear ether solvent having two or more ethyleneoxy structural units may be, in relation to the R¹ and the R² of the general formula, dimethyl ether, ethyl methyl ether, methyl propyl ether, butyl methyl ether, diethyl ether, ethyl propyl ether, butyl ethyl ether, dipropyl ether, butyl propyl ether, dibutyl ether, or the like.

Further, in the magnesium electrode-type electrolytic solution according to the present invention, the linear ether solvent combined with the magnesium salt may be particularly one having a same alkyl group. That is, in the general formula representing the linear ether, the R¹ and the R² may be mutually a same alkyl group.

As regards this feature, in a preferred aspect, the linear ether contained in the magnesium electrode-type electrolytic solution according to the present invention may be, with respect to the glycol ether such as a diethylene glycol ether, a triethylene glycol ether, a tetraethylene glycol ether, a pentaethylene glycol ether, a hexaethylene glycol ether, a heptaethylene glycol ether, an octaethylene glycol ether, a nonaethylene glycol ether, or a decaethylene glycol ether, dimethyl ether, diethyl ether, dipropyl ether, dibutyl ether, dipentyl ether, dihexyl ether, diheptyl ether, dioctyl ether, or the like. That is, the linear ether solvent having two or more ethyleneoxy structural units may be, in relation to the R¹ and the R² of the general formula, dimethyl ether, diethyl ether, dipropyl ether, dibutyl ether, dipentyl ether, dihexyl ether, diheptyl ether, dioctyl ether, or the like.

For example, in the magnesium electrode-type electrolytic solution according to the present invention, the linear ether solvent combined with the magnesium salt may be particularly one having two ethyleneoxy structural units. That is, in the general formula representing the linear ether, the n may be an integer of 2, and the linear ether may thus be an ether having two ethyleneoxy structural units. In a preferred aspect, the linear ether solvent combined with the magnesium salt is a diethylene glycol ether.

In the magnesium electrode-type electrolytic solution according to the present invention, the linear ether as a solvent may be at least one selected from the group consisting of diethylene glycol dimethyl ether, diethylene glycol diethyl ether, and diethylene glycol ethyl methyl ether, or may be, for example, at least one selected from the group consisting of diethylene glycol dimethyl ether and diethylene glycol ethyl methyl ether. As regards this feature, in one preferred aspect of the present invention, the linear ether as the solvent in the magnesium electrode-type electrolytic solution may be diethylene glycol dimethyl ether and/or diethylene glycol ethyl methyl ether, and the magnesium salt contained in the solvent is a combination of the halogen metal salt and the imide metal salt. For example, in the magnesium electrode-type electrolytic solution according to the present invention, the linear ether as the solvent is diethylene glycol dimethyl ether and/or diethylene glycol ethyl methyl ether, and the halogen metal salt contained in the solvent may be magnesium chloride and the imide salt may be a magnesium salt of a perfluoroalkylsulfonyl imide (for example, Mg(TFSI)₂).

The magnesium electrode-type electrolytic solution according to the present invention is suitable for the electrochemical device including a magnesium electrode as a negative electrode and is further suitable when the device includes a sulfur electrode as a positive electrode. That is, the electrolytic solution according to the present invention is an electrolytic solution for the electrochemical device including a magnesium electrode as a negative electrode, and the electrochemical device preferably includes a sulfur electrode as a positive electrode. When being an electrolytic solution for such an electrochemical device including a pair of the magnesium electrode and the sulfur electrode (hereinafter also referred to as a "magnesium-sulfur electrode-type electrochemical device"), the electrolytic solution according to the present invention can exhibit an effect of further improving the discharge potential of the magnesium-sulfur electrode-type electrochemical device. This further increase of the discharge potential increases the energy density of the magnesium-sulfur electrode-type electrochemical device to allow a desired device to be easily realized. Assuming that the magnesium-sulfur electrode-type electrochemical device is a secondary battery, the present invention has given a possibility of providing a battery having a theoretical energy density superior to the theoretical energy density of lithium ion batteries.

### [Electrochemical device according to the present invention]

Next, an electrochemical device according to the present invention is described. The electrochemical device includes a negative electrode and a positive electrode, and includes a magnesium electrode as the negative electrode. The electrochemical device is characterized by including an electrolytic solution formed of at least the electrolytic solution described above.

That is, the electrolytic solution of the electrochemical device according to the present invention contains at least a solvent and a magnesium salt, and the solvent is an ether-based solvent, preferably a linear ether. That is, the electrochemical device includes, as the solvent in the electrolytic solution, not a cyclic ether such as tetrahydrofuran, but an ether having a linear molecular structure.

The electrochemical device according to the present invention includes a magnesium electrode as a negative electrode, and thus corresponds to a magnesium electrode-type electrochemical device. In the electrolytic solution used in the magnesium electrode-type electrochemical device, the linear ether solvent is an ether having two or more ethyleneoxy structural units in a following general formula.

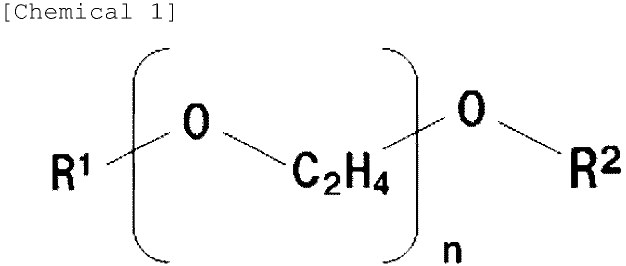

In the formula, R¹ and R² are each independently a hydrocarbon group having 1 to 10 inclusive carbon atoms, and n is an integer of 2 to 10 inclusive.

Such a magnesium electrode-type electrochemical device includes the electrolytic solution in which the linear ether has two or more ethyleneoxy structural units, and can thus exhibit a higher discharge potential. That is, the electrolyte solvent used in the magnesium electrode-type electrochemical device according to the present invention is directly or indirectly related to the improvement of the discharge potential by having not a single ethyleneoxy structural unit, but two or more ethyleneoxy structural units.

As described above, in the linear ether having "two or more ethyleneoxy structural units", the R¹ and the R² in the general formula may be each independently an aliphatic hydrocarbon group having 1 to 10 inclusive carbon atoms. In such a linear ether having "two or more ethyleneoxy structural units", the n may be an integer of 2 to 4 inclusive in the general formula, and the linear ether may thus be an ether having 2 to 4 inclusive ethyleneoxy structural units. In the linear ether solvent having "two or more ethyleneoxy structural units", the R¹ and the R² in the general formula may be each independently a lower alkyl group having 1 to 4 inclusive carbon atoms. Further, in the linear ether solvent having "two or more ethyleneoxy structural units", the R¹ and the R² in the general formula may be mutually a same alkyl group (for example, mutually an identical lower alkyl group).

In the magnesium electrode-type electrochemical device according to the present invention, the linear ether solvent having "two or more ethyleneoxy structural units" may be, as just one example, at least one selected from the group consisting of diethylene glycol dimethyl ether, diethylene glycol diethyl ether, and diethylene glycol ethyl methyl ether, or may be, for example, diethylene glycol dimethyl ether and/or diethylene glycol ethyl methyl ether.

The magnesium electrode-type electrochemical device includes the electrolytic solution in which the linear ether and a magnesium salt coexist, and such coexistence can further promote the improvement of the discharge potential in the magnesium electrode-type electrochemical device according to the present invention.

The magnesium salt preferably contains at least one of a halogen metal salt or an imide metal salt. This means that the magnesium salt contained or dissolved in the linear ether solvent having "two or more ethyleneoxy structural units" may be one type of magnesium salt, or may be a magnesium salt formed of more types of magnesium salts. In an aspect, the magnesium salt is formed of two types of salts, and is a combination of a halogen metal salt and an imide metal salt. The halogen metal salt is, for example, magnesium chloride (MgCl₂), and the imide salt may be a magnesium salt of a perfluoroalkylsulfonyl imide, for example, Mg(TFSI)₂. MgCl₂ and Mg(TFSI)₂ are comparatively highly stable Mg salts. Therefore, even when MgCl₂ and Mg(TFSI)₂ are contained at a high concentration in the linear ether solvent, high safety can be obtained. This can be a different advantage from an advantage of a conventional electrolytic solution containing AlCl₃ and a Grignard reagent. Further, MgCl₂ and Mg(TFSI)₂ have low reactivity not to generate a side reaction other than an electrochemical reaction with sulfur, and thus, further increasing the capacitance of the battery can be expected. Further, overvoltage caused by precipitation and dissolution of magnesium is low to enable a narrower hysteresis of charge and discharge than the hysteresis in conventionally reported examples. A high energy density can also be expected in that respect. Further, MgCl₂ and Mg(TFSI)₂ enabling a substantial increase in the total concentration of the Mg salts lead to a high ion conductivity and expectation of high rate characteristics, and can lower the freezing point and raise the boiling point to provide an electrochemical device having a wide temperature range.

When two types of salts such as a combination of the halogen metal salt and the imide metal salt are used as the magnesium salt, the amounts of the salts may be about the same (in one specific example, those salts may be mutually an equimolecular amount). The amounts are not particularly limited, but regarding the combination of MgCl₂ and Mg(TFSI)₂ as an example, the mole ratio between MgCl₂ and Mg(TFSI)₂ may be about 1 : 0.7 to 1.3, for example, about 1 : 0.85 to 1.25.

In the electrochemical device according to the present invention, the positive electrode is preferably a sulfur electrode containing at least sulfur. That is, the sulfur electrode of the electrochemical device according to the present invention is preferably formed as a positive electrode of sulfur (S) such as S₈ and/or polymer sulfur. Since the negative electrode is a magnesium electrode, the electrochemical device according to the present invention is an electrochemical device including a pair of the magnesium electrode and the sulfur electrode, and since the electrochemical device also includes a suitable electrolytic solution, the electrochemical device exhibits a high discharge potential (in other words, the electrochemical device exhibits a high discharge potential as close as possible to the theoretical potential of a magnesium-sulfur secondary battery). Since a higher discharge potential leads to a higher energy density, the magnesium-sulfur secondary battery comes, due to the present invention, closer to realization of a battery having a theoretical energy density superior to the theoretical energy density of lithium ion batteries.

The sulfur electrode is an electrode containing at least sulfur, and may contain, for example, a conductive assistant and/or a binder other than sulfur. In this case, the content of sulfur in the sulfur electrode is 5 mass% to 95 mass% inclusive, preferably 70 mass% to 90 mass% inclusive, relative to the whole electrode.

Examples of the conductive assistant contained in the sulfur electrode used as the positive electrode include carbon materials such as graphite, a carbon fiber, carbon black, and a carbon nanotube, and one or two or more thereof can be used in mixture. As the carbon fiber, for example, a vapor growth carbon fiber (VGCF (registered trade name)) can be used. As the carbon black, for example, acetylene black and/or ketjen black can be used. As the carbon nanotube, for example, a multi-wall carbon nanotube (MWCNT) such as a single wall carbon nanotube (SWCNT) and/or a double-wall carbon nanotube (DWCNT) can be used. A material other than the carbon materials can also be used as long as the material has good conductivity. For example, a metal material such as a Ni powder, and/or a conductive polymer material or the like can also be used. Examples of the binder contained in the sulfur electrode used as the positive electrode include polymer resins such as a fluorine-based resin (e.g., polyvinylidene difluoride (PVdF) and/or polytetrafluoroethylene (PTFE)), a polyvinyl alcohol (PVA)-based resin, and/or a styrene-butadiene copolymerization rubber (SBR)-based resin. In addition, a conductive polymer may also be used as the binder. As the conductive polymer, for example, a substituted or unsubstituted polyaniline, polypyrrole, or polythiophene, and a (co)polymer formed of one or two thereof can be used.

On the other hand, in the electrochemical device according to the present invention, a material (specifically, a negative electrode active material) constituting the negative electrode is, because of the "magnesium electrode", formed of metal element magnesium, a magnesium alloy, or a magnesium compound. When the negative electrode is formed of a metal element object of magnesium (for example, a magnesium plate), the purity of Mg of the metal element object is 90% or more, preferably 95% or more, further preferably 98% or more. The negative electrode can be produced from, without limitation, for example, a plate-shaped material or a foil-shaped material, and can also be formed (shapened) using a powder.

The negative electrode can also have a structure in which a negative electrode active material layer is formed in the vicinity of a surface of the negative electrode. For example, the negative electrode may include, as the negative electrode active material layer, a layer containing magnesium (Mg), further containing at least any of carbon (C), oxygen (O), sulfur (S) and a halogen, and having magnesium ion conductivity. Such a negative electrode active material layer may be one having a single peak derived from magnesium in the range of 40 eV to 60 eV inclusive, which is, however, no more than an example. The halogen is, for example, at least one selected from the group consisting of fluorine (F), chlorine (Cl), bromine (Br), and iodine (I). In this case, the negative electrode active material layer may have a single peak derived from magnesium in the range of 40 eV to 60 eV inclusive from a surface thereof across to a depth of 2 × 10⁻⁷ m. This is because the negative electrode active material layer exhibits good electrochemical activity from the surface across to the inside thereof. Due to the same reason, the negative electrode active material layer may have an almost constant oxidation state of magnesium from the surface thereof across to a distance of 2 × 10⁻⁷ nm in the depth direction. Here, the surface of the negative electrode active material layer means, of both surfaces of the negative electrode active material layer, a surface on a side constituting a surface of the electrode, and a back surface is a surface on side opposite to this surface, that is, a surface on a side constituting an interface between a current collector and the negative electrode active material layer. It is possible to confirm by XPS (X-ray Photoelectron Spectroscopy) whether or not the negative electrode active material layer the elements described above. It is also possible to similarly confirm by the XPS that the negative electrode active material layer has the peak described above and an oxidation state of magnesium.

In the electrochemical device according to the present invention, the positive electrode and the negative electrode are preferably separated from each other by an inorganic separator or an organic separator that allows magnesium ions to pass therethrough while preventing a short circuit caused by contact of both electrodes. Examples of the inorganic separator include a glass filter and a glass fiber. Examples of the organic separator include a porous film made from a synthetic resin formed of, for example, polytetrafluoroethylene, polypropylene, and/or polyethylene, and the organic separator can also have a structure obtained by stacking porous films of two or more of these resins. Above all, a polyolefin porous film is preferable because it has an excellent short circuit-prevention effect and is capable of improving the safety of the battery by its shutdown effect.

An electrolyte layer in the electrochemical device can be formed of the electrolytic solution according to the present invention and a polymer compound formed of a retention body retaining the electrolytic solution.

The polymer compound may be one that is swollen by the electrolytic solution. In this case, the polymer compound swollen by the electrolytic solution may be a gel. Examples of the polymer compound include polyacrylonitrile, polyvinylidene difluoride, a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, a polyacrylic acid, a polymethacrylic acid, a styrene-butadiene rubber, a nitrile-butadiene rubber, polystyrene, and/or polycarbonate. Particularly, the polymer compound may be polyacrylonitrile, polyvinylidene difluoride, polyhexafluoropropylene, or polyethylene oxide when the viewpoint of electrochemical stability is valued. The electrolyte layer may be formed as a solid electrolyte layer.

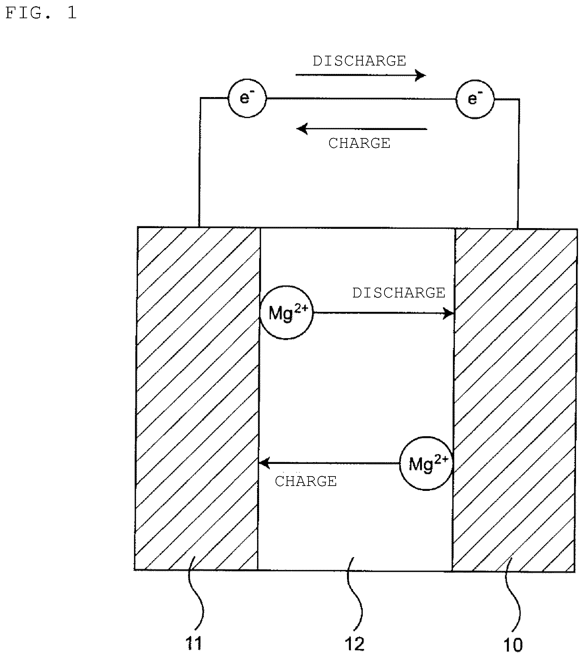

The magnesium electrode-type electrochemical device can be configured as a secondary battery, and FIG. 1 shows a conceptual diagram of that case. As shown in the drawing, during charge, a magnesium ion (Mg²⁺) moves from a positive electrode 10 to a negative electrode 11 through an electrolyte layer 12 to convert electric energy into chemical energy and thus store power. During discharge, the magnesium ion returns from the negative electrode 11 to the positive electrode 10 through the electrolyte layer 12 to generate electric energy.

When the electrochemical device is formed as a battery (a primary battery or a secondary battery) including the electrolytic solution according to the present invention, the battery can be used as a driving power supply or an auxiliary power supply of, for example, a notebook personal computer, a PDA (personal digital assistant), a mobile phone, a smartphone, a cordless phone base unit/handset, a video camera, a digital still camera, an electronic book, an electronic dictionary, a portable audio player, a radio, a headphone, a game device, a navigation system, a memory card, a pacemaker, a hearing aid, an electric tool, an electric shaver, a refrigerator, an air conditioner, a TV receiver, a stereo, a water heater, a microwave, a dishwasher, a washing machine, a dryer, a lighting device, a toy, a medical device, a robot, a load conditioner, a traffic light, a railway vehicle, a golf cart, an electric cart, and/or an electric car (including a hybrid car). The battery can also be mounted as, for example, a power supply for power storage that is used for buildings represented by a home or for a power-generating facility, or can be used to supply power to these buildings and power-generating facility. In the electric car, a converter that converts power into driving force by supplying the power is generally a motor. A controller (control unit) that performs information processing involving control of a vehicle includes, for example, a controller that displays the residual amount of the battery on the basis of information on the residual amount of the battery. The battery can also be used in an electric storage device of a so-called smart grid. Such an electric storage device not only supplies power but also is capable of storing power by receiving a supply of power from another power supply. As the other power supply, it is possible to use, for example, thermal power generation, nuclear power generation, hydropower generation, a solar battery, wind power generation, geothermal power generation and/or a fuel battery (including a biofuel battery).

The electrochemical device (that is, the secondary battery) according to the present invention is applicable to a battery pack including a secondary battery, control means (or a control unit) that performs control involving the secondary battery, and an exterior encompassing the secondary battery. In the battery pack, the control means controls, for example, charge and discharge, overdischarge, or overcharge of the secondary battery.

The electrochemical device (that is, the secondary battery) according to the present invention is also applicable to an electronic device that receives a supply of power from a secondary battery.

The electrochemical device according to the present invention is also applicable to a secondary battery of an electric vehicle including a converter that convers power supplied from the secondary battery into driving force of the vehicle, and a controller (or a control unit) that performs information processing involving control of the vehicle on the basis of information on the secondary battery. In the electric vehicle, the converter typically receives a supply of power from the secondary battery to drive a motor and generates driving force. Regenerative energy can also be used for driving the motor. The controller (or the control unit) performs information processing involving control of the vehicle on the basis of, for example, the residual amount of the secondary battery. Examples of such an electric vehicle include a so-called hybrid car in addition to an electric car, an electric motorbike, an electric bicycle, a railway vehicle, and the like.

The electrochemical device (that is, the secondary battery) according to the present invention is applicable to a power system configured to receive a supply of power from a secondary battery and/or supply power from a power supply to the secondary battery. Any power system, even a simple power unit is acceptable as such a power system, as long as the power system approximately uses power. Examples of the power system include a smart grid, a home energy management system (HEMS), and/or a vehicle, and the power system is also capable of storing power.

The electrochemical device (that is, the secondary battery) according to the present invention is applicable to a power supply for power storage that is configured to include a secondary battery and be connected to an electronic device having power supplied thereto. The power supply for power storage can be basically used in any power system or power unit without limiting the application use, and can be used in, for example, a smart grid.

More detailed features of the electrochemical device according to the present invention, and other features such as further specific aspects have been described above in [Electrolytic solution according to the present invention for electrochemical device], and are not described to avoid repetition.

Here, further described in detail is a case in which the magnesium electrode-type electrochemical device according to the present invention is provided as a secondary battery. Hereinafter, the secondary battery is also referred to as a "magnesium secondary battery".

The magnesium secondary battery as the electrochemical device according to the present invention is applicable, without particular limitation, to a machine, a device, a tool, an apparatus, or a system (assembly of a plurality of devices or the like) that can use the secondary battery as a power supply for driving or operation, or a power storage source for reserve of power. The magnesium secondary battery (for example, a magnesium-sulfur secondary battery) used as a power supply may be a main power supply (a preferentially used power supply) or an auxiliary power supply (in place of the main power supply or a power supply used by switching from the main power supply). When the magnesium secondary battery is used as an auxiliary power supply, the main power supply is not limited to the magnesium secondary battery.

Examples of a specific application use of the magnesium secondary battery (particularly, the magnesium-sulfur secondary battery) include, but are not limited to, a video camera, a camcorder, a digital still camera, a mobile phone, a personal computer, a television receiver, various display devices, a cordless phone, a headphone stereo, a music player, a portable radio, electronic paper such as an electronic book and/or electronic newspaper, various electronic devices such as a portable information terminal including a PDA, an electric device (including a portable electronic device); a toy; portable living appliances such as an electric shaver; a lighting appliance such as an indoor light; medical electronic equipment such as a pacemaker and/or a hearing aid; memory devices such as a memory card; a battery pack that is used in a personal computer or the like as a detachable power supply; electric tools such as an electric drill and/or an electric saw; a power storage system and/or a home energy server (home power storage device) such as a home battery system that reserves power for emergency or the like, and a power supply system; a power storage unit and/or a backup power supply; electric vehicles such as an electric car, an electric motorbike, an electric bicycle, and/or Segway (registered trade name); and driving of a power driving-force converter (specifically, for example, a driving motor) in an aircraft and/or a ship.

Above all, the magnesium secondary battery (particularly, the magnesium-sulfur secondary battery) is effectively applied to, for example, a battery pack, an electric vehicle, a power storage system, a power supply system, an electric tool, an electronic device, and/or an electric device. The battery pack is a power supply including the magnesium secondary battery, and is a so-called assembled battery or the like. The electric vehicle is a vehicle operated (for example, running) using the magnesium secondary battery as a driving power supply, and may be a car (for example, a hybrid car) also including a driving source other than the secondary battery. The power storage system (for example, a power supply system) is a system using the magnesium secondary battery as a power storage source. For example, in a home power storage system (for example, a power supply system), power is reserved in a power storage source, i.e., the magnesium secondary battery to make a household appliance and the like usable with the power. The electric tool is a tool that uses the magnesium secondary battery as a driving power supply to move a movable portion (for example, a drill). The electronic device and the electric device are devices that exhibit various functions using the magnesium secondary battery as an operation power supply (that is, a power supply source).

Hereinafter, a cylindrical magnesium secondary battery and a planar laminate-film magnesium secondary battery are described.

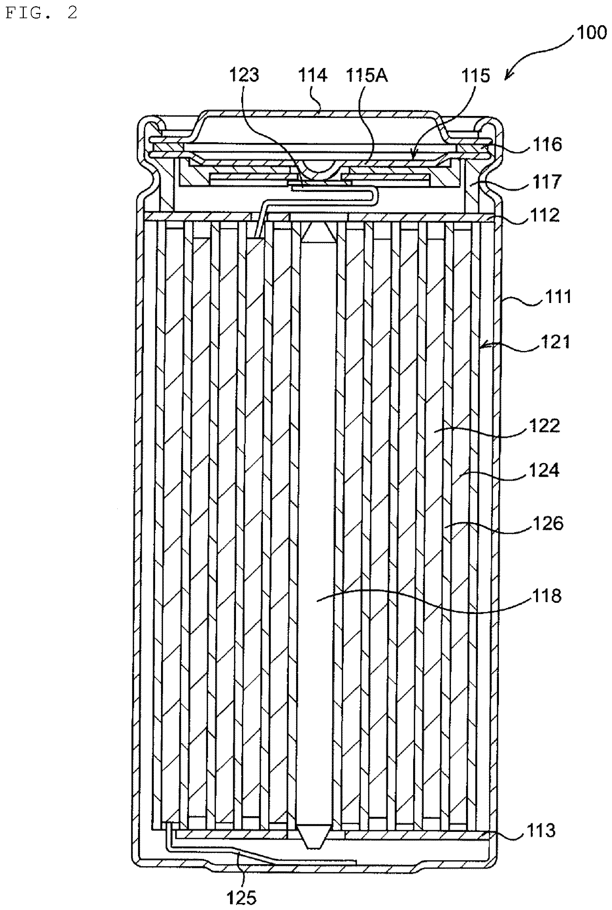

FIG. 2 shows a schematic sectional view of a cylindrical magnesium secondary battery 100. The magnesium secondary battery 100 includes an electrode structure 121 and a pair of insulating plates 112 and 113 housed in a hollow columnar electrode structure housing member 111. The electrode structure 121 can be produced, for example, by stacking a positive electrode 122 and a negative electrode 124 with a separator 126 interposed between the positive electrode and the negative electrode to give an electrode structure and then winding the electrode structure. The electrode structure housing member (for example, a battery can) 111 has a hollow structure that is closed at one end and open at the other end, and is produced from, for example, iron (Fe) and/or aluminum (Al). The insulating plates 112 and 113 forming the pair are disposed so as to sandwich the electrode structure 121 and extend perpendicular to a winding peripheral surface of the electrode structure 121. The electrode structure housing member 111 is crimped at the open end for fixing, to the open end, a battery cover 114, a safety valve mechanism 115, and a thermosensitive resistance element (for example, a PTC element, Positive Temperature Coefficient element) 116, with a gasket 117 interposed. Thus, the electrode structure housing member 111 is firmly closed. The battery cover 114 is produced from, for example, a same material to the material of the electrode structure housing member 111. The safety valve mechanism 115 and the thermosensitive resistance element 116 are disposed on the inner side of the battery cover 114, and the safety valve mechanism 115 is electrically connected to the battery cover 114 via the thermosensitive resistance element 116. In the safety valve mechanism 115, a disk plate 115A is inversed when the internal pressure reaches a certain pressure level or more, due to, for example, an internal short circuit and/or external heating. This cuts the electrical connection between the battery cover 114 and the electrode structure 121. In order to prevent abnormal heat generation attributed to a large current, the resistance of the thermosensitive resistance element 116 is increased along with a rise of temperature. The gasket 117 is produced from, for example, an insulating material. Asphalt or the like may be applied to a surface of the gasket 117.

A center pin 118 is inserted into the center of the winding of the electrode structure 121. The center pin 118, however, is not necessary inserted into the center of the winding. A positive electrode lead 123 produced from a conductive material such as aluminum is connected to the positive electrode 122. Specifically, the positive electrode lead 123 is attached to a positive electrode current collector. A negative electrode lead 125 produced from a conductive material such as copper is connected to the negative electrode 124. Specifically, the negative electrode lead 125 is attached to a negative electrode current collector. The negative electrode lead 125 is welded to the electrode structure housing member 111 and is electrically connected to the electrode structure housing member 111. The positive electrode lead 123 is welded to the safety valve mechanism 115 and is electrically connected to the battery cover 114. FIG. 2 shows an example of disposing the negative electrode lead 125 at one location (an outermost peripheral portion of the wound electrode structure), but there is also a case of disposing the negative electrode lead at two locations (the outermost peripheral portion and an innermost peripheral portion of the wound electrode structure).

The electrode structure 121 is formed by stacking the positive electrode 122 and the negative electrode 124 with the separator 126 interposed between the positive electrode and the negative electrode, the positive electrode including the positive electrode current collector and a positive electrode active material layer formed on the positive electrode current collector (more specifically, on both surfaces of the positive electrode current collector), and the negative electrode including the negative electrode current collector and a negative electrode active material layer formed on the negative electrode current collector (more specifically, on both surfaces of the negative electrode current collector). The positive electrode active material layer is not formed in a region of the positive electrode current collector to which the positive electrode lead 123 is attached, and the negative electrode active material layer is not formed in a region of the negative electrode current collector to which the negative electrode lead 125 is attached.

The magnesium secondary battery 100 can be manufactured on the basis of, for example, the following procedure.

First, a positive electrode active material layer is formed on both surfaces of a positive electrode current collector, and a negative electrode active material layer is formed on both surfaces of a negative electrode current collector.

Next, a positive electrode lead 123 is attached to the positive electrode current collector by welding or the like. Further, a negative electrode lead 125 is attached to the negative electrode current collector by welding or the like. Next, the positive electrode 122 and the negative electrode 124 are stacked with a separator 126 interposed between the positive electrode and the negative electrode, the separator being formed of a fine porous polyethylene film. The stacked positive electrode, negative electrode, and separator are wound (more specifically, an electrode structure (that is, a laminate structure) of positive electrode 122/separator 126/negative electrode 124/separator 126 is wound) to produce an electrode structure 121, and then a protection tape (not shown) is attached to an outermost peripheral portion of the electrode structure. Thereafter, a center pin 118 is inserted into the center of the electrode structure 121. Next, the electrode structure 121 is housed in an electrode structure housing member 111 while sandwiched between a pair of insulating plates 112 and 113. In this case, a tip of the positive electrode lead 123 is attached to a safety valve mechanism 115 by welding or the like, and a tip of the negative electrode lead 125 is attached to the electrode structure housing member 111 by welding or the like. Thereafter, an electrolytic solution is injected by a decompression method to impregnate the separator 126 with the electrolytic solution. Next, the electrode structure housing member 111 is crimped at an opening end for fixing, to the opening end, a battery cover 114, a safety valve mechanism 115, and a thermosensitive resistance element 116, with a gasket 117 interposed.

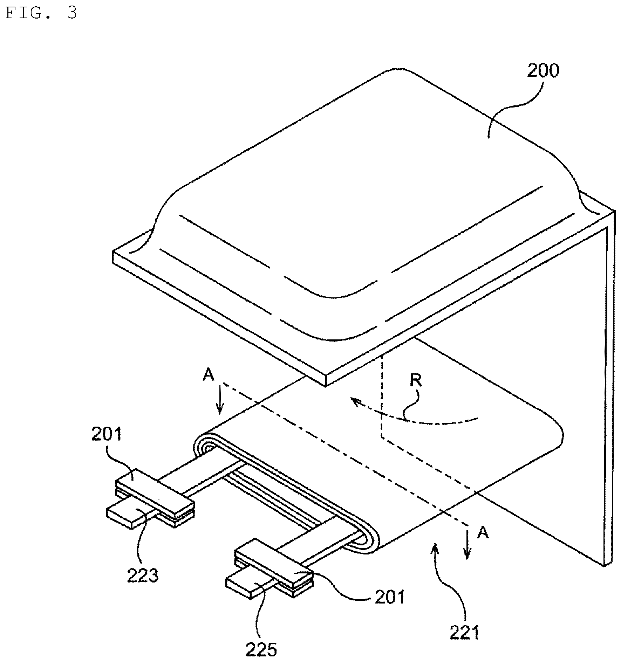

Next, a planar laminate-film secondary battery is described. FIG. 3 shows a schematic exploded perspective view of the secondary battery. This secondary battery includes an exterior member 200 formed of a laminate film and an electrode structure 221 that is basically the same as described above and is housed in the exterior member. The electrode structure 221 can be produced, for example, by stacking a positive electrode and a negative electrode with a separator and an electrolyte layer interposed between the positive electrode and the negative electrode, to give a laminate structure, and then winding this laminate structure. A positive electrode lead 223 is attached to the positive electrode, and a negative electrode lead 225 is attached to the negative electrode. An outermost peripheral portion of the electrode structure 221 is protected by a protection tape. The positive electrode lead 223 and the negative electrode lead 225 protrude from the inside toward the outside of the exterior member 200 in an identical direction. The positive electrode lead 223 is made from a conductive material such as aluminum. The negative electrode lead 225 is made from a conductive material such as copper, nickel, and/or stainless steel.

The exterior member 200 is one film that can be folded in the direction of an arrow R shown in FIG. 3, and a recess (for example, an emboss) for housing the electrode structure 221 is disposed in one part of the exterior member 200. The exterior member 200 is, for example, a laminate film formed by stacking a fusion layer, a metal layer, and a surface protection layer in this order. In a step of manufacturing the secondary battery, the exterior member 200 is folded so as to make fusion layers opposite to each other with the electrode structure 221 interposed between the fusion layers, and then outer peripheral portions of the fusion layers are bonded to each other by fusion. The exterior member 200, however, may be one formed by bonding two different laminate films with an adhesive or the like. The fusion layer is formed of a film of, for example, polyethylene and/or polypropylene. The metal layer is formed of, for example, an aluminum foil. The surface protection layer is formed of, for example, nylon and/or polyethylene terephthalate. Above all, the exterior member 200 is preferably an aluminum laminate film formed by stacking a polyethylene film, an aluminum foil, and a nylon film in this order. The exterior member 200, however, may be a laminate film having another laminate structure, a polymer film of polypropylene or the like, or a metal film. Specifically, the exterior member may be formed of a moisture-resistance aluminum laminate film formed by stacking a nylon film, an aluminum foil, an unstretched polypropylene film in this order from the outside of the aluminum laminate film.

In order to prevent intrusion of outdoor air, an adhesive film 201 is inserted between the exterior member 200 and the positive electrode lead 223 and between the exterior member 200 and the negative electrode lead 225. The adhesive film 201 may be made from a material having adhesiveness to the positive electrode lead 223 and the negative electrode lead 225, for example, a polyolefin resin, and may be made from, more specifically, a polyolefin resin such as polyethylene, polypropylene, modified polyethylene, or modified polypropylene.

The foregoing has been described mainly assuming the secondary battery, but the features of the present disclosure also similarly apply to, other electrochemical devices, for example, a capacitor, an air battery, and a fuel battery. Hereinafter, those application uses are described.

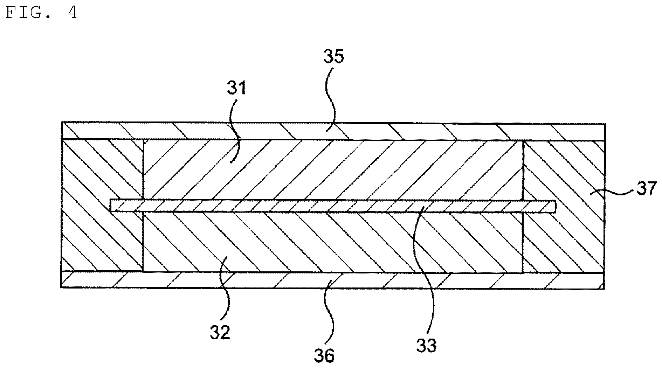

As shown in a schematic sectional view of FIG. 4, the electrochemical device according to the present invention can be provided as a capacitor. In the capacitor, a positive electrode 31 and a negative electrode 32 are disposed opposite to each other, with a separator 33 interposed between the positive electrode and the negative electrode, the separator having been impregnated with an electrolytic solution.

A gel electrolyte film impregnated with the electrolytic solution according to the present invention may be disposed on least one surface of the separator 33, the positive electrode 31, or the negative electrode 32. Reference symbols 35 and 36 represent current collectors, and reference symbol 37 represents a gasket.

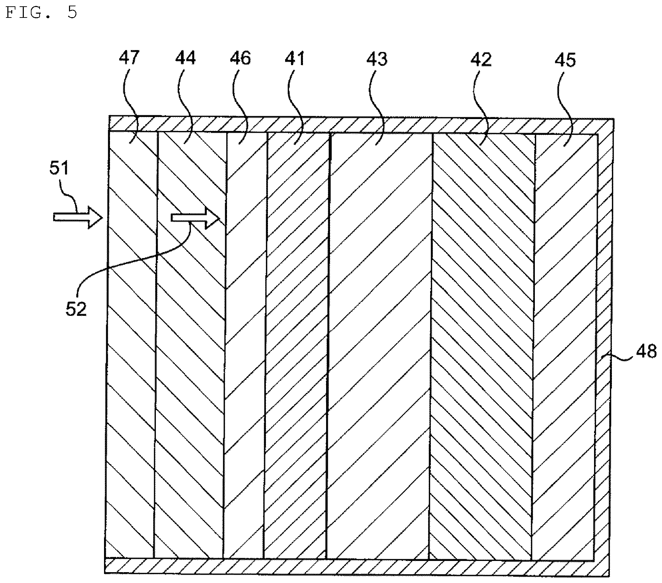

Alternatively, as shown in a conceptual view of FIG. 5, the electrochemical device according to the present invention can be provided as an air battery. The air battery is formed of, for example, an oxygen-selective permeable film 47 that hardly allows water vapor to permeate but selectively allows oxygen to permeate therethrough, an air electrode-side current collector 44 made from a conductive porous material, a porous diffusion layer 46 disposed between the air electrode-side current collector 44 and a porous positive electrode 41 and made from a conductive material, the porous positive electrode 41 containing a conductive material and a catalyst material, a separator and an electrolytic solution (or a solid electrolyte including an electrolytic solution) 43 that hardly allow water vapor to pass therethrough, a negative electrode 42 that releases a magnesium ion, a negative electrode-side current collector 45, and an exterior body 48 housing these layers.

Oxygen 52 in air (for example, atmosphere) 51 is selectively allowed to permeate the oxygen-selective permeable film 47, passes through the air electrode-side current collector 44 made from a porous material, is diffused by the diffusion layer 46, and is supplied to the porous positive electrode 41. The progress of oxygen having permeated the oxygen-selective permeable film 47 is partially blocked by the air electrode-side current collector 44, but oxygen having passed through the air electrode-side current collector 44 is diffused by the diffusion layer 46 and spread to enable oxygen to be efficiently distributed to the whole porous positive electrode 41, never allowing the air electrode-side current collector 44 to inhibit the supply of oxygen to the whole surface of the porous positive electrode 41. In addition, the permeation of water vapor is suppressed by the oxygen-selective permeable film 47 to reduce deterioration due to an influence of moisture in an air atmosphere, while oxygen being efficiently supplied to the whole porous positive electrode 41, so that the battery output can be increased and the air battery can be used stably for a long time.

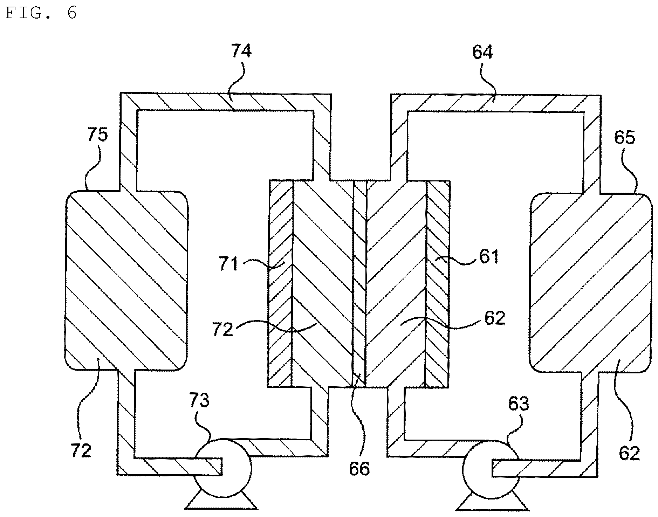

Alternatively, as shown in a conceptual view of FIG. 6, the electrochemical device according to the present invention can be provided as a fuel battery. The fuel battery is formed of, for example, a positive electrode 61, a positive electrode electrolytic solution 62, a positive electrode electrolytic solution transport pump 63, a fuel flow path 64, a positive electrode electrolytic solution storage container 65, a negative electrode 71, a negative electrode electrolytic solution 72, a negative electrode electrolytic solution transport pump 73, a fuel flow path 74, a negative electrode electrolytic solution storage container 75, and an ion exchange membrane 66. In the fuel flow path 64, the positive electrode electrolytic solution 62 continuously or intermittently flows (circulates) through the positive electrode electrolytic solution storage container 65 and the positive electrode electrolytic solution transport pump 63, and in the fuel flow path 74, the negative electrode electrolytic solution 72 continuously or intermittently flows or circulates through the negative electrode electrolytic solution storage container 75 and the negative electrode electrolytic solution transport pump 73, so that power is generated between the positive electrode 61 and the negative electrode 71. As the positive electrode electrolytic solution 62, one obtained by adding a positive electrode active material to the electrolyte solution according to the present invention can be used, and as the negative electrode electrolytic solution 72, one obtained by adding a negative electrode active material to the electrolyte solution according to the present invention can be used.

As to the negative electrode in the electrochemical device, a Mg metal plate can be used, or the negative electrode can be manufactured by the following technique. For example, a Mg electrolytic solution (Mg-EnPS) containing MgCl₂ and EnPS (ethyl-n-propyl sulfone) is prepared, and the Mg electrolytic solution may be used to precipitate metal Mg on a Cu foil by an electrolytic plating method, thus forming as a negative electrode active material layer a Mg plating layer on the Cu foil. An XPS analysis on a surface of the Mg plating layer obtained by this technique has resulted in clarifying the presence of Mg, C, O, S, and Cl on the surface of the Mg plating layer, a Mg-derived peak observed by the surface analysis has not been split, and a single Mg-derived peak has been observed in the range of 40 eV to 60 eV inclusive. Further, the surface of the Mg plating layer has been excavated about 200 nm in the depth direction by an Ar sputtering method and analyzed by XPS. The XPS analysis has resulted in clarifying that the position and the shape of the Mg-derived peak after the Ar sputtering have no change from the position and the shape of the peak before the Ar sputtering.

The electrochemical device according to the present invention can be particularly used as a magnesium secondary battery as described with reference to FIGS. 1 to 3, and some application examples of the magnesium secondary battery are more specifically described. The configurations of the application examples described below are each just one example, and the configuration is appropriately changeable.

The magnesium secondary battery can be used in the form of a battery pack. The battery pack is a simple battery pack (a so-called soft pack) including the magnesium secondary battery, and is mounted on, for example, an electronic device represented by a smartphone. In place of or in addition to the magnesium secondary battery, the battery pack may include an assembled battery formed of six magnesium secondary batteries connected in two in parallel and three in series. The connection type of the magnesium secondary batteries may be in series, in parallel, or a combination of both.

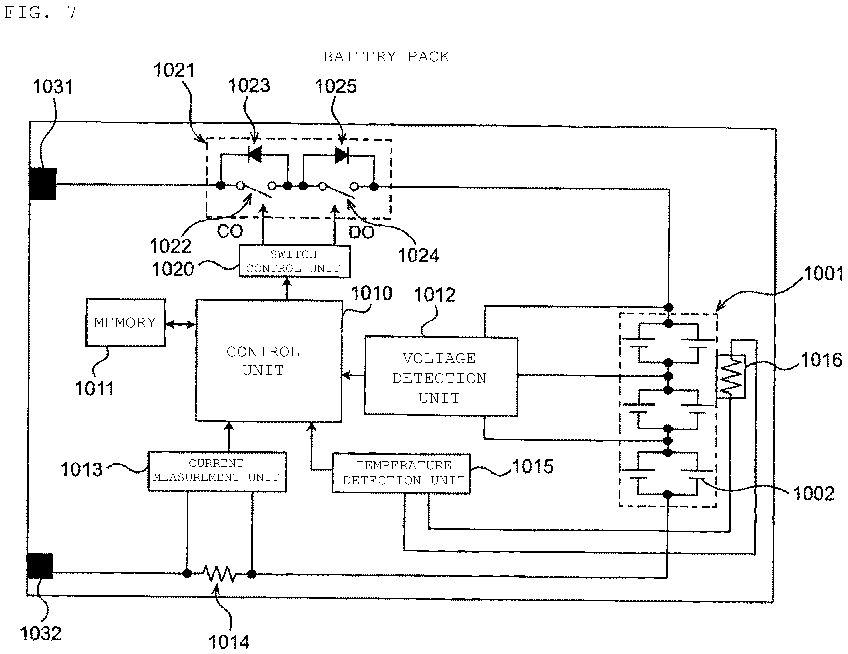

FIG. 7 shows a block diagram representing an example of a circuit configuration when the magnesium secondary battery according to the present invention is applied to a battery pack. The battery pack includes a cell (for example, an assembled battery) 1001, an exterior member, a switch unit 1021, a current detection resistor 1014, a temperature detection element 1016, and a control unit 1010. The switch unit 1021 includes a charge control switch 1022 and a discharge control switch 1024.

The battery pack also includes a positive electrode terminal 1031 and a negative electrode terminal 1032. During charging, the positive electrode terminal 1031 and the negative electrode terminal 1032 are respectively connected to a positive electrode terminal and a negative electrode terminal of a charger, and the charge is thus performed. On the other hand, during use of an electronic device, the positive electrode terminal 1031 and the negative electrode terminal 1032 are respectively connected to a positive electrode terminal and a negative electrode terminal of the electronic device, and the discharge is thus performed.

The cell 1001 is configured by connecting a plurality of magnesium secondary batteries 1002 according to the present disclosure in series and/or in parallel. FIG. 7 shows a case of the six magnesium secondary batteries 1002 connected in two in parallel and three in series (2P3S), but any connection method such as p in parallel and q in series (p and q are integers) other than this case may be employed.

The switch unit 1021 includes the charge control switch 1022 and a diode 1023, and the discharge control switch 1024 and a diode 1025, and is controlled by the control unit 1010. The diode 1023 has a polarity in a reverse direction to the charge current flowing from the positive electrode terminal 1031 toward the cell 1001 but in a forward direction to the discharge current flowing from the negative electrode terminal 1032 toward the cell 1001. The diode 1025 has a polarity in a forward direction to the charge current and in a reverse direction to the discharge current. Although the switch unit is disposed on the plus (+) side in the example, it may be disposed on the minus (-) side. The charge control switch 1022 is closed when the battery voltage becomes an overcharge detection voltage, and is controlled by the control unit 1010 so that the charge current does not flow in the current path of the cell 1001. After the charge control switch 1022 is closed, only discharge can be performed through the diode 1023. In addition, the charge control switch is closed when a large current flows during charging, and is controlled by the control unit 1010 so as to cut off the charge current flowing in the current path of the cell 1001. The discharge control switch 1024 is closed when the battery voltage becomes an overdischarge detection voltage, and is controlled by the control unit 1010 so that the discharge current does not flow in the current path of the cell 1001. After the discharge control switch 1024 is closed, only charge can be performed through the diode 1025. In addition, the discharge control switch is closed when a large current flows during discharging, and is controlled by the control unit 1010 so as to cut off the discharge current flowing in the current path of the cell 1001.

The temperature detection element 1016 is formed of, for example, a thermistor, and is disposed in the vicinity of the cell 1001, and a temperature measurement unit 1015 measures the temperature of the cell 1001 using the temperature detection element 1016 and sends the measurement result to the control unit 1010. A voltage measurement unit 1012 measures the voltage of the cell 1001 and the voltage of each of the magnesium secondary batteries 1002 constituting the cell 1001, A/D converts the measurement result, and sends the converted measurement result to the control unit 1010. A current measurement unit 1013 measures the current using the current detection resistor 1014, and sends the measurement result to the control unit 1010.

A switch control unit 1020 controls the charge control switch 1022 and the discharge control switch 1024 of the switch unit 1021 on the basis of the voltage and the current sent from the voltage measurement unit 1012 and the current measurement unit 1013. The switch control unit 1020 sends a control signal to the switch unit 1021 to prevent overcharge and overdischarge and overcurrent charge and discharge when the voltage of any of the magnesium secondary batteries 1002 becomes equal to or lower than the overcharge detection voltage or the overdischarge detection voltage and/or when a large current rapidly flows. The charge control switch 1022 and the discharge control switch 1024 can be formed of, for example, a semiconductor switch such as a MOSFET. In this case, the diodes 1023 and 1025 are formed of parasitic diodes of the MOSFETs. When a p-channel FET is used as the MOSFET, the switch control unit 1020 supplies a control signal DO and a control signal CO to respective gate portions of the charge control switch 1022 and the discharge control switch 1024. The charge control switch 1022 and the discharge control switch 1024 are brought into conduction by a gate potential that is a predetermined value or more lower than the source potential. That is, in normal charge and discharge operations, the control signals CO and DO are set at low levels, and the charge control switch 1022 and the discharge control switch 1024 are kept conductive. Then, in the case of, for example, overcharge or overdischarge, the control signals CO and DO are set at high levels, and the charge control switch 1022 and the discharge control switch 1024 are closed.

A memory 1011 is formed of, for example, a non-volatile memory, i.e., an EPROM (Erasable Programmable Read Only Memory). The memory 1011 stores in advance a numerical value calculated by the control unit 1010 and/or an internal resistance value and the like of each of the magnesium secondary batteries 1002 in the initial state measured at the stage of the manufacturing process, and these values can be appropriately rewritten. In addition, by storing the full charge capacitance of the magnesium secondary battery 1002, the memory together with the control unit 1010 enables, for example, the remaining capacitance to be calculated.

The temperature measurement unit 1015 measures the temperature using the temperature detection element 1016, performs charge and discharge control at the time of abnormal heat generation, and performs correction in the calculation of the remaining capacitance.

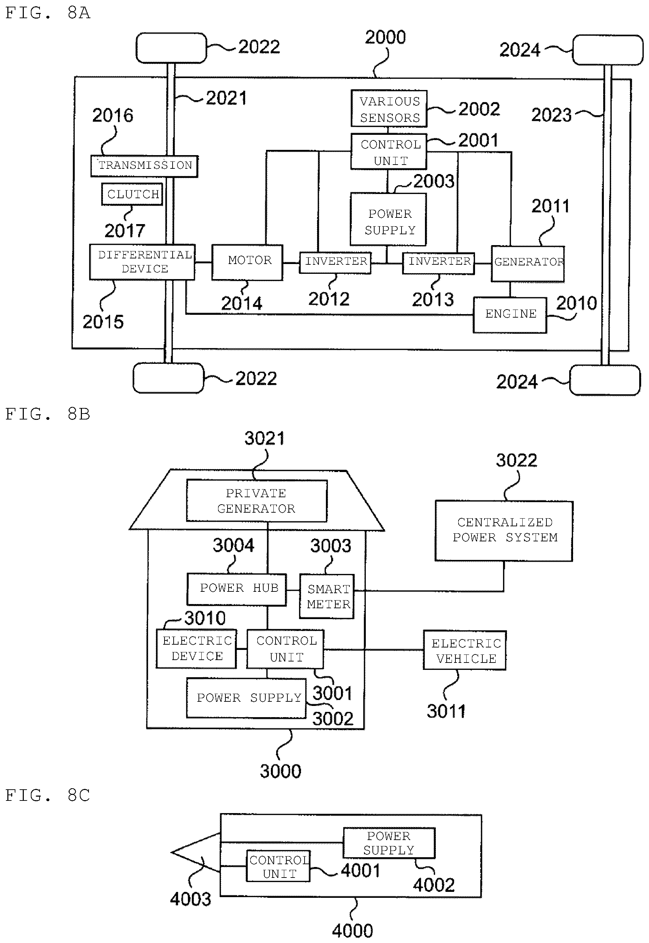

Next described is application of the magnesium secondary battery to an electric vehicle. FIG. 8A shows a block diagram representing a configuration of an electric vehicle such as a hybrid car that is one example of the electric vehicle. The electric vehicle includes, for example, in a metal case 2000, a control unit 2001, various sensors 2002, a power supply 2003, an engine 2010, a generator 2011, inverters 2012 and 2013, a driving motor 2014, a differential device 2015, a transmission 2016, and a clutch 2017. In addition, the electric vehicle includes, for example, a front wheel drive shaft 2021, a front wheel 2022, a rear wheel drive shaft 2023, and a rear wheel 2024 that are connected to the differential device 2015 and/or the transmission 2016.

The electric vehicle can travel using, for example, either one of the engine 2010 and the motor 2014 as a driving source. The engine 2010 is a main power source and is, for example, a gasoline engine. When the engine 2010 is used as a power source, the driving force (for example, rotational force) of the engine 2010 is transmitted to the front wheel 2022 or the rear wheel 2024 via, for example, driving units, i.e., the differential device 2015, the transmission 2016, and the clutch 2017. The rotational force of the engine 2010 is also transmitted to the generator 2011, the generator 2011 generates AC power using the rotational force, the AC power is converted into DC power via the inverter 2013, and the DC power is stored in the power supply 2003. On the other hand, when a conversion unit, i.e., the motor 2014 is used as a power source, the power (for example, DC power) supplied from the power supply 2003 is converted into AC power via the inverter 2012, and the motor 2014 is driven using the AC power. The driving force (for example, rotational force) converted from the power by the motor 2014 is transmitted to the front wheel 2022 or the rear wheel 2024 via, for example, the driving units, i.e., the differential device 2015, the transmission 2016, and the clutch 2017.

When the electric vehicle is decelerated via a braking mechanism (not shown), the resistance during the deceleration is transmitted to the motor 2014 as rotational force, and the rotational force may be used to cause the motor 2014 to generate AC power. The AC power is converted into DC power via the inverter 2012, and the DC regenerative power is stored in the power supply 2003.

The control unit 2001 controls the operation of the entire electric vehicle, and includes, for example, a CPU. The power supply 2003 can include one or two or more magnesium secondary batteries (not shown) according to the present invention. The power supply 2003 can be configured to be connected to an external power supply and to store power by receiving a supply of power from the external power supply. The various sensors 2002 are used, for example, to control the rotational speed of the engine 2010 and to control the opening degree (throttle opening degree) of a throttle valve (not shown). The various sensors 2002 include, for example, a speed sensor, an acceleration sensor, and/or an engine rotational speed sensor.

Although the case in which the electric vehicle is a hybrid car has been described, the electric vehicle may be a vehicle (for example, an electric car) that operates using only the power supply 2003 and the motor 2014 without using the engine 2010.

Next described is application of the magnesium secondary battery to a power storage system (for example, a power supply system). FIG. 8B shows a block diagram representing a configuration of a power storage system (for example, a power supply system). The power storage system includes a control unit 3001, a power supply 3002, a smart meter 3003, and a power hub 3004 in, for example, a house 3000 such as a home or a commercial building.

The power supply 3002 is connected to, for example, an electric device (for example, an electronic device) 3010 installed in the house 3000, and can be connected to an electric vehicle 3011 left outside the house 3000. Further, the power supply 3002 is connected to, for example, a private generator 3021 installed in the house 3000 via the power hub 3004, and can be connected to an external centralized power system 3022 via the smart meter 3003 and the power hub 3004. The electric device (for example, the electronic device) 3010 includes, for example, one or two or more household appliances. Examples of the household appliances include a refrigerator, an air conditioner, a television receiver, and/or a hot water machine. The private generator 3021 is formed of, for example, a solar power generator and/or a wind power generator. Examples of the electric vehicle 3011 include an electric car, a hybrid car, an electric motorbike, an electric bicycle, and/or Segway (registered trade name). Examples of the centralized power system 3022 include, but are not limited to, a commercial power supply, a power generation device, a power transmission network, and/or a smart grid (next generation power transmission network), and the examples further include, but are not limited to, a thermal power plant, a nuclear power plant, a hydropower plant, and/or a wind power plant. Examples of the power generation device included in the centralized power system 3022 include, but are not limited to, various solar batteries, a fuel battery, a wind power generation device, a micro-hydropower generation device, and/or a geothermal power generation device.

The control unit 3001 controls the operation of the entire power storage system (including the use state of the power supply 3002), and includes, for example, a CPU. The power supply 3002 can include one or two or more magnesium secondary batteries (not shown) according to the present invention. The smart meter 3003 is, for example, a network compatible power meter installed in the house 3000 on the power demand side, and can communicate with the power supply side. The smart meter 3003 can perform an efficient and stable energy supply, for example, by controlling the balance of the supply and the demand in the house 3000 while communicating with the outside.

In the power storage system, the power is, for example, stored in the power supply 3002 from an external power supply, i.e., the centralized power system 3022 via the smart meter 3003 and the power hub 3004, and stored in the power supply 3002 from an independent power supply, i.e., the private generator 3021 via the power hub 3004. The power stored in the power supply 3002 is supplied to the electric device (for example, the electronic device) 3010 and the electric vehicle 3011 in accordance with the instruction of the control unit 3001, so that the electric device (for example, the electronic device) 3010 can be operated and the electric vehicle 3011 can be charged. That is, the power storage system is a system that enables the storage and the supply of power in the house 3000 using the power supply 3002.

The power stored in the power supply 3002 is available anytime. Therefore, for example, power can be stored in the power supply 3002 from the centralized power system 3022 in the midnight during which the electricity charge is low, and the power stored in the power supply 3002 can be used during the day when the electricity charge is high.

The power storage system described above may be installed for each household (for example, one family unit), or may be installed for multiple households (for example, multiple family units) each.

Next described is application of the magnesium secondary battery to an electric tool. FIG. 8C shows a block diagram representing a configuration of an electric tool. The electric tool is, for example, an electric drill, and includes a control unit 4001 and a power supply 4002 in a tool main body 4000 made from a plastic material or the like. For example, a drill portion 4003 that is a movable portion is rotatably attached to the tool main body 4000. The control unit 4001 controls the operation of the entire electric tool (including the use state of the power supply 4002), and includes, for example, a CPU. The power supply 4002 can include one or two or more magnesium secondary batteries (not shown) according to the present invention. The control unit 4001 supplies power from the power supply 4002 to the drill portion 4003 in accordance with the operation of an operation switch (not shown).

The embodiments of the present invention have been heretofore described which, however, have been only illustratively described as typical examples. Accordingly, the present invention is not limited to these embodiments, and a person skilled in the art would easily understand that various aspects of the present invention can be considered within a scope that does not change the gist of the present invention.

The composition of the electrolytic solution, the raw materials used for the manufacturing, the manufacturing method, the manufacturing conditions, the characteristics of the electrolytic solution, and the configuration and the structure of the electrochemical device or the battery that have been described above are examples, are not limited to the examples, and can be appropriately changed. The electrolytic solution according to the present invention can be mixed with an organic polymer (for example, polyethylene oxide, polyacrylonitrile, and/or polyvinylidene difluoride (PVdF)) and used as a gel electrolyte.

### EXAMPLES

The following verification test was performed to confirm the effect of the present invention.

Particularly, the verification test was performed to confirm whether or not the linear ether solvent contained in the magnesium electrode-type electrolytic solution contributes to improvement of the characteristics of the magnesium electrode-type electrolytic solution by having not a single ethyleneoxy structural unit, but "two or more ethyleneoxy structural units".

### Example 1

As the electrochemical device, a magnesium-sulfur secondary battery having the following specifications was produced.

### (Specifications of magnesium-sulfur secondary battery)

• Negative electrode: magnesium electrode (Mg plate with ϕ15 mm and thickness of 200 µm/purity: 99.9%)
• Positive electrode: sulfur electrode (electrode having 10 mass% of S₈ sulfur, containing ketjen black (KB) as conductive assistant, and containing polytetrafluoroethylene (PTFE) as binder)
• Separator: glass fibers
• Electrolytic solution
• Magnesium salt: halogen metal salt (MgCl₂ (anhydride) 0.8 M) and imide metal salt (Mg(TFSI)₂ 0.8 M)
• Linear ether solvent: diethylene glycol dimethyl ether
• Form of secondary battery: coin battery CR2016 type

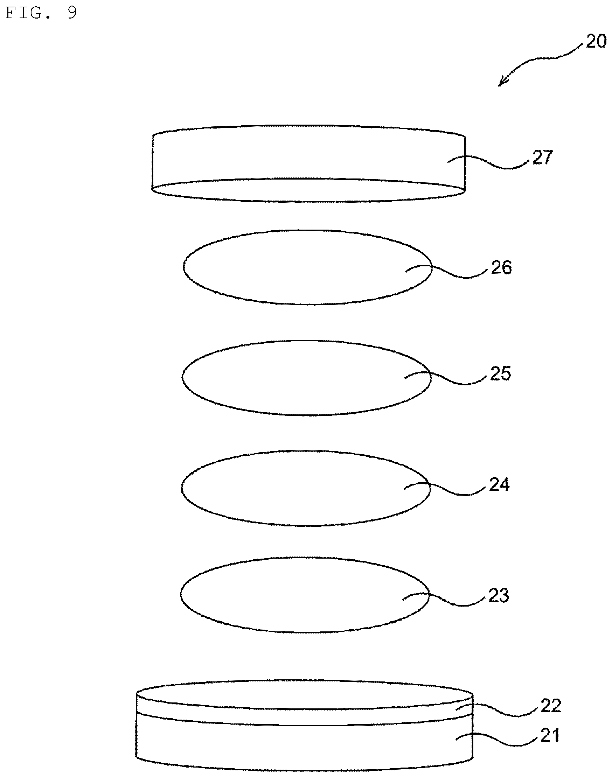

FIG. 9 shows a schematic developed view of the produced battery. For a positive electrode 23, 10 mass% of sulfur (S₈), 60 mass% of ketjen black as a conductive assistant, 30 mass% of polytetrafluoroethylene (PTFE) as a binder were mixed using an agate mortar. Then, the mixture was subjected to roll forming about 10 times using a roller compactor while blended with acetone. Thereafter, the formed piece was vacuum-dried at 70°C for 12 hours. Thus, the positive electrode 23 could be obtained.

A gasket 22 was put on a coin battery can 21, the positive electrode 23 made from sulfur, a separator 24 formed of glass fibers, a negative electrode 25 formed of a Mg plate having a diameter of 15 mm and a thickness of 200 µm, a spacer 26 formed of a stainless steel plate having a thickness of 0.5 mm, and a coin battery cover 27 were stacked in this order, and then the coin battery can 21 was crimped and thus sealed. The spacer 26 was spot-welded to the coin battery cover 27 in advance. The electrolytic solution was used in the form of being contained in the separator 24 of the coin battery 20.

The produced battery was subjected to charge and discharge. The charge and discharge conditions are as follows.

### (Charge and discharge conditions)

Discharge conditions: CC discharge 0.1 mA/cutoff 0.4 V or 0.7 V
Charge conditions: CC charge 0.1 mA/cutoff 2.2 V
Temperature: 25°C

### Example 2

A magnesium-sulfur secondary battery was produced in the same manner as in Example 1 except that "diethylene glycol dimethyl ether" as the linear ether solvent of the electrolytic solution was changed to "diethylene glycol ethyl methyl ether" (and the usage of MgCl₂ and Mg(TFSI)₂ was changed to 1.0 M and 0.8 M, respectively), and the battery was subjected to the same charge and discharge.

### Comparative Example 1

A magnesium-sulfur secondary battery was produced in the same manner as in Example 1 except that "diethylene glycol dimethyl ether" as the linear ether solvent of the electrolytic solution was changed to "dimethoxy ethane (ethylene glycol dimethyl ether" (and the usage of MgCl₂ and Mg(TFSI)₂ was changed to 2 M and 1 M, respectively), and the battery was subjected to the same charge and discharge.

### (Results)

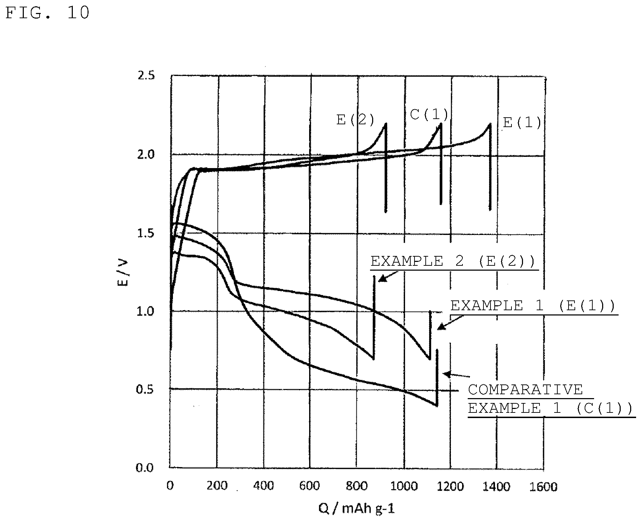

FIG. 10 shows the results. FIG. 10 shows charge and discharge curves of Examples 1 and 2 and Comparative Example 1.

Unlike Comparative Example 1, Examples 1 and 2 discharged at 1.0 V or more particularly in the second plateau and exhibited high average discharge potentials, as clarified by the charge and discharge curves in FIG. 10. The discharge potentials are clearly higher values than conventionally reported, for example, the discharge curves reported in "(1) Toyota: JP 2013-525993 W, (2) Kang Xu: Angew. Chem. Int. Ed., 2017, 56, p13526-13530, and (3) KIT: Adv. Energy Mater., 2014, 1401155".

When these matters are summed up, the following features could be found from the verification test.

The linear ether solvent contained in the magnesium electrode-type electrolytic solution increases the discharge potential of the magnesium electrode-type electrochemical device by having not a single ethyleneoxy structural unit, but "two or more ethyleneoxy structural units". With a higher discharge potential, realization of an electrochemical device having a higher energy density can be achieved.
• Since the electrolytic solution in Examples 1 and 2 contained the halogen metal salt and the imide metal salt, the use of the magnesium salt contained in the linear ether solvent can contribute to a higher discharge potential of the magnesium electrode-type electrochemical device.
• As regards the halogen metal salt and the imide metal salt in Examples 1 and 2, since the halogen metal salt was magnesium chloride, the use of magnesium chloride as the magnesium salt contained in the linear ether solvent can contribute to a higher discharge potential of the magnesium electrode-type electrochemical device.
• As regards the halogen metal salt and the imide metal salt in Examples 1 and 2, since the imide metal salt was Mg(TFSI)₂, the use of a magnesium salt of a perfluoroalkylsulfonyl imide as the magnesium salt contained in the linear ether solvent can contribute to a higher discharge potential of the magnesium electrode-type electrochemical device.
• Since the linear ether in Examples 1 and 2 had an aliphatic hydrocarbon group having 1 to 10 inclusive carbon atoms, such a feature can contribute to a higher discharge potential of the magnesium electrode-type electrochemical device.
• Since the linear ether solvent in Examples 1 and 2 contained two hydrocarbon groups that were each a lower alkyl group having 1 to 4 inclusive carbon atoms, such a feature can contribute to a higher discharge potential of the magnesium electrode-type electrochemical device.
• Since the linear ether solvent in Examples 1 and 2 contained two hydrocarbon groups that were mutually the same alkyl group, such a feature can contribute to a higher discharge potential of the magnesium electrode-type electrochemical device.

### INDUSTRIAL APPLICABILITY

The electrolytic solution according to the present invention can be used in various fields in which energy is obtained using an electrochemical reaction. The electrolytic solution according to the present invention can be used in not only secondary batteries but also various electrochemical devices such as a capacitor, an air battery, and a fuel battery. The application uses, however, are no more than examples.

### DESCRIPTION OF REFERENCE SYMBOLS

10: Positive electrode
11: Negative electrode
12: Electrolyte layer
20: Coin battery
21: Coin battery can
22: Gasket
23: Positive electrode
24: Separator
25: Negative electrode
26: Spacer
27: Coin battery cover
31: Positive electrode
32: Negative electrode
33: Separator
35,36: Current collector
37: Gasket
41: Porous positive electrode
42: Negative electrode
43: Separator and electrolytic solution
44: Air electrode-side current collector
45: Negative electrode-side current collector
46: Diffusion layer
47: Oxygen-selective permeable film
48: Exterior body
51: Air (atmosphere)
52: Oxygen
61: Positive electrode
62: Positive electrode electrolytic solution
63: Positive electrode electrolytic solution transport pump
64: Fuel flow path
65: Positive electrode electrolytic solution storage container
71: Negative electrode
72: Negative electrode electrolytic solution
73: Negative electrode electrolytic solution transport pump
74: Fuel flow path
75: Negative electrode electrolytic solution storage container
66: Ion exchange membrane
100: Magnesium secondary battery
111: Electrode structure housing member (battery can)
112,113: Insulating plate
114: Battery cover
115: Safety valve mechanism
115A: Disk plate
116: Thermosensitive resistance element (PTC element)
117: Gasket
118: Center pin
121: Electrode structure
122: Positive electrode
123: Positive electrode lead
124: Negative electrode
125: Negative electrode lead
126: Separator
200: Exterior member
201: Adhesive film
221: Electrode structure
223: Positive electrode lead
225: Negative electrode lead
1001: Cell (assembled battery)
1002: Magnesium secondary battery
1010: Control unit
1011: Memory
1012: Voltage measurement unit
1013: Current measurement unit
1014: Current detection resistor
1015: Temperature measurement unit
1016: Temperature detection element
1020: Switch control unit
1021: Switch unit
1022: Charge control switch
1024: Discharge control switch
1023,1025: Diode
1031: Positive electrode terminal
1032: Negative electrode terminal
CO,DO: Control signal
2000: Case
2001: Control unit
2002: Various sensors
2003: Power supply
2010: Engine
2011: Generator
2012,2013: Inverter
2014: Driving motor
2015: Differential device
2016: Transmission
2017: Clutch
2021: Front wheel drive shaft
2022: Front wheel
2023: Rear wheel drive shaft
2024: Rear wheel
3000: House
3001: Control unit
3002: Power supply
3003: Smart meter
3004: Power hub
3010: Electric device (electronic device)
3011: Electric vehicle
3021: Private generator
3022: Centralized power system
4000: Tool main body
4001: Control unit
4002: Power supply
4003: Drill portion

## Claims

1. An electrolytic solution for an electrochemical device including a magnesium electrode as a negative electrode, the electrolytic solution comprising:
a solvent containing a linear ether; and
a magnesium salt contained in the solvent,
the linear ether having two or more ethyleneoxy structural units represented by a following general formula, 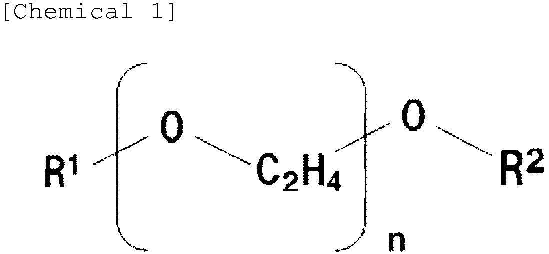
wherein, R¹ and R² are each independently a hydrocarbon group having 1 to 10 inclusive carbon atoms, and n is an integer of 2 to 10 inclusive.

2. The electrolytic solution according to claim 1, wherein the hydrocarbon group having 1 to 10 inclusive carbon atoms is an aliphatic hydrocarbon group.

3. The electrolytic solution according to claim 1 or 2, wherein the n is an integer of 2 to 4 inclusive, and the linear ether has 2 to 4 inclusive ethyleneoxy structural units.

4. The electrolytic solution according to any of claims 1 to 3, wherein the R¹ and the R² are each independently a lower alkyl group having 1 to 4 inclusive carbon atoms.

5. The electrolytic solution according to any of claims 1 to 4, wherein the n is 2, and the linear ether has two ethyleneoxy structural units.

6. The electrolytic solution according to any of claims 1 to 5, wherein the R¹ and the R² are mutually a same alkyl group.

7. The electrolytic solution according to any of claims 1 to 5, wherein the linear ether is at least one selected from the group consisting of diethylene glycol dimethyl ether, diethylene glycol diethyl ether, and diethylene glycol ethyl methyl ether.

8. The electrolytic solution according to any of claims 1 to 7, comprising a halogen metal salt or an imide metal salt as the magnesium salt.

9. The electrolytic solution according to claim 8, wherein the halogen metal salt is magnesium chloride.

10. The electrolytic solution according to claim 8 or 9, wherein the imide metal salt is a magnesium salt of a perfluoroalkylsulfonyl imide.

11. The electrolytic solution according to any of claims 1 to 7, comprising, as the magnesium salt, magnesium chloride and magnesium bis(trifluoromethanesulfonyl)imide.

12. The electrolytic solution according to any of claims 1 to 11, wherein a positive electrode of the electrochemical device is a sulfur electrode containing sulfur.

13. An electrochemical device comprising a negative electrode and a positive electrode,
the negative electrode being a magnesium electrode, and
an electrolytic solution of the electrochemical device being the electrolytic solution according to any of claims 1 to 12.

14. The electrochemical device according to claim 13, wherein the positive electrode is a sulfur electrode containing sulfur.
